# FASCICULE DE BREVET EUROPEEN

(11) **EP 3 233 753 B1**
(45) Date de publication et mention de la délivrance du brevet: **05.12.2018**
(21) Numéro de dépôt: 15823355.1
(22) Date de dépôt: 18.12.2015
(51) Int. Cl.: C04B 28/04, C04B 40/06, C04B 111/00

(54) **COMPOSITION HYDRAULIQUE POUR LA RÉALISATION DE CHAUSSÉES**
HYDRAULISCHE ZUSAMMENSETZUNG ZUM BAUEN VON STRASSEN
HYDRAULIC COMPOSITION FOR BUILDING ROADS

(30) Priorité: 18.12.2014 FR 1462816
(43) Date de publication de la demande: 25.10.2017
(73) Titulaire: Holcim Technology Ltd, 8645 Jona (CH)
(72) Inventeur: CREYX, Antoine, 38291 Saint Quentin Fallavier (FR); JONNEKIN, Arnaud, 38510 Olouise (FR); MATHONIER, Benoit, 38291 Saint Quentin Fallavier (FR); MESSAD, Samir, 69008 Lyon (FR)
(74) Mandataire: Regimbeau
(86) Numéro de dépôt international: PCT/FR2015/053619
(87) Numéro de publication internationale: WO 2016/097648

(56) Documents cités:
- WO-A1-2010/095097
- WO-A1-2010/103253
- WO-A1-2011/131904
- WO-A1-2011/161384
- WO-A1-2014/072533
- FR-A1- 2 990 938
- FR-A1- 3 002 226
- JP-A- 2002 018 411
- US-A1- 2006 217 464
- US-A1- 2012 148 806

## Description

La présente invention se rapporte au domaine de la réalisation de chaussées.

Plus particulièrement, la présente invention a pour objet une composition hydraulique pour la réalisation de chaussées, en particulier pour la réfection des chaussées.

On entend par réfection, l'opération de travaux publics consistant à retirer tout ou partie de la couche de roulement d'une chaussée pour la remplacer par une nouvelle couche de roulement.

Il est connu de construire des chaussées à base d'enrobé bitumineux, par exemple en grave-bitume.

L'enrobé bitumineux présente l'avantage d'acquérir rapidement dès son compactage des résistances à la compression.

Ainsi, l'enrobé bitumineux est souvent utilisé pour la réfection d'une chaussée.

Cependant, sous certaines contraintes de fluage ou de cisaillement, l'enrobé bitumineux peut être soumis à des mécanismes de dégradation, notamment à l'orniérage des couches de roulement de la chaussée.

Ces contraintes sont provoquées par l'appui et les frottements des roues sur la chaussée, notamment lors des phases de freinage, d'accélération et en virage.

Ainsi, l'orniérage est particulièrement prépondérant sur les chaussées de carrefours giratoires où la trajectoire est courbe et où les phases de freinage et d'accélération sont plus importantes.

Par ailleurs, l'orniérage sur des chaussées réalisées à base d'enrobé bitumineux est d'autant plus marqué que les températures sont élevées, la viscosité de l'enrobé bitumineux ayant tendance à diminuer avec l'augmentation de la température.

Ainsi, l'utilisation de l'enrobé bitumineux permet une réfection rapide d'une chaussée, mais peut nécessiter une fréquence de maintenance relativement plus élevée par rapport à l'utilisation d'autres matériaux, notamment le béton.

Il est connu de réaliser des chaussées en béton, notamment les chaussées de carrefours giratoires, pour pallier le problème de l'orniérage lié à l'utilisation d'enrobé bitumineux.

Le béton frais est acheminé depuis la centrale à béton vers le chantier à l'aide de camions-malaxeurs.

Le béton frais peut ensuite être déversé sur le sol dans un coffrage puis étalé et compacté à l'aide d'une poutre vibrante.

Selon une variante, le béton frais peut être versé dans la trémie d'une machine à coffrage glissant ou la trémie d'un finisseur.

La finition de la couche de roulement est réalisée, par exemple par balayage, afin de créer un état de surface dont l'adhérence est compatible avec la circulation de véhicules sur la chaussée.

Selon les recommandations professionnelles citées dans l'ouvrage « Chaussées en béton - Guide technique, 2000, LCPC/SETRA », une chaussée peut être rouverte à la circulation lorsque sa résistance à la compression est au moins de 20 MPa, déterminée selon la méthode d'essai décrite dans la norme NF EN 12390-3 d'avril 2012.

Les bétons actuellement utilisés atteignent une résistance à la compression d'au moins 20 MPa au bout de quelques jours.

En conséquence, les bétons actuellement utilisés entrainent un temps d'indisponibilité de la chaussée pouvant atteindre plusieurs jours contre une journée pour l'enrobé bitumineux.

Il est connu des bétons légers (WO 2014/072533) pouvant convenir entre autre pour revêtir des routes.

Il est connu également d'utiliser des bétons à prise rapide pour la construction de bâtiments (WO 2011/131904).

Ces bétons ou mortiers à prise rapide utilisent des liants hydrauliques à prise et durcissement rapides. Les bétons utilisant de tels liants dans leurs compositions, une fois mis en oeuvre, acquièrent des résistances mécaniques importantes à court terme.

Ces bétons sont des bétons fluides ou autoplaçants (ou autocompactants) et ont une ouvrabilité d'une heure minimum à deux heures maximum.

Ils ont de préférence une résistance à la compression d'au moins 1 MPa 4 heures après le gâchage pour les bétons fluides et d'au moins 1 MPa 5 heures après le gâchage pour les bétons autoplaçants (ou autocompactants), et d'au moins 12 MPa 24 heures après le gâchage.

L'ouvrabilité des bétons fluides est mesurée par la hauteur d'affaissement au cône d'Abrams, ou valeur de « slump », selon la méthode d'essai décrite dans la norme NF EN 12350-2 datant d'avril 2012.

Cette méthode d'essai permet de classer les bétons selon plusieurs classes d'affaissement allant de S1 à S5 en fonction de la valeur de l'affaissement.

On estime qu'un béton est fluide lorsque la valeur de l'affaissement est d'au moins 150 mm, de préférence au moins 180 mm, ce qui correspond à la classe d'affaissement S4.

L'ouvrabilité des bétons autoplaçants (ou autocompactants) est généralement mesurée à partir du diamètre d'étalement ou « slump flow », selon la méthode d'essai décrite dans la norme NF EN 12350-8 datant de novembre 2010.

Cette méthode d'essai permet de classer les bétons selon plusieurs classes d'étalement allant de F1 à F6 en fonction de la valeur du diamètre d'étalement.

On estime qu'un béton est autoplaçant (ou autocompactant) lorsque la valeur de cet étalement est supérieure à 620 mm (et en général inférieure à 800 mm), ce qui correspond à la classe d'étalement F6.

La consistance de ces bétons fluides ou autoplaçants (ou autocompactants) ne permet pas leur mise en oeuvre sur une chaussée.

En particulier, de tels bétons fluides ou autoplaçants (ou autocompactants) sont incompatibles avec l'utilisation d'une machine à coffrage glissant ou l'utilisation d'un finisseur.

Par ailleurs, il n'est pas possible de conférer une pente à ces bétons fluides ou autoplaçants (ou autocompactants).

Ainsi, l'objectif recherché selon la présente invention consiste à formuler une composition hydraulique prête à l'emploi présentant une consistance non fluide dans les classes d'affaissement S1, S2 ou S3 convenant à sa mise en oeuvre sur le chantier, maintenue pendant au moins les 90 premières minutes, et permettant d'atteindre une résistance en compression d'au moins 20 MPa 24 heures après le gâchage à 20°C, de préférence 18 heures après le gâchage à 20°C ou encore 14 heures après le gâchage à 20°C, une résistance d'au moins 20 MPa 24 heures après le gâchage à 10°C, et une résistance d'au moins 20 MPa 12 heures après le gâchage à 30°C.

On entend par « prête à l'emploi » une composition hydraulique livrée à l'état frais ne nécessitant pas de modifications de sa composition sur le chantier.

En particulier les adjuvants sont incorporés au moment de l'élaboration de la composition hydraulique dans la centrale à béton et non pas sur le chantier.

L'élaboration d'une telle composition hydraulique est rendue d'autant plus difficile qu'il s'agit de réaliser une composition hydraulique accélérée et donc avec une ouvrabilité limitée.

A cet effet, la présente invention se rapporte à une composition hydraulique pour la réalisation de chaussées, en particulier pour la réfection de chaussées comprenant :
- un liant hydraulique comprenant un ciment,
- de 0,18% à 0,35% d'un superplastifiant, pourcentage exprimé en poids sec par rapport au ciment, ledit superplastifiant comprenant un polymère ramifié comportant au moins une chaine pendante ayant une fonction terminale du type phosphonate ou phosphate, et
- de 0,25% à 2% d'un accélérateur de prise, pourcentage exprimé en poids sec par rapport au ciment, ledit accélérateur de prise comprenant un sel de calcium,
ladite composition hydraulique présentant un rapport massique Eau/Ciment supérieur ou égal à 0,38 et strictement inférieur à 0,45.

Une telle composition hydraulique permet de pallier le problème de l'orniérage lié à l'utilisation d'enrobé bitumineux.

En effet, le béton n'est pas soumis à un mécanisme de dégradation tel que l'orniérage.

Par ailleurs, les chaussées en béton présentent plusieurs autres avantages par rapport aux chaussées en enrobé bitumineux, notamment en terme de résistance à l'orniérage, de durabilité et de coût d'entretien.

Une composition hydraulique comprend généralement un liant hydraulique et de l'eau, éventuellement des granulats et éventuellement des adjuvants, par exemple autres que ceux décrits précédemment. Les compositions hydrauliques incluent à la fois les compositions à l'état frais et à l'état durci, par exemple un coulis de ciment, un mortier ou un béton.

Les granulats utilisés dans les compositions selon l'invention incluent du ou des sables et des gravillons définis selon la norme NF EN 12620-A1 de juin 2008.

Par l'expression « liant hydraulique », on entend selon la présente invention tout composé ayant la propriété de s'hydrater en présence d'eau et dont l'hydratation permet d'obtenir un solide ayant des caractéristiques mécaniques. Le liant hydraulique peut être un ciment selon la norme « ciment » NF EN 197-1 d'avril 2012.

Un ciment comprend généralement un clinker et du sulfate de calcium. Le clinker peut en particulier être un clinker Portland.

Un clinker Portland est obtenu par clinkérisation à haute température d'un mélange comprenant du calcaire et, par exemple, de l'argile. Par exemple, un clinker Portland est un clinker tel que défini dans la norme NF EN 197-1 d'avril 2012.

Un clinker Portland est généralement co-broyé avec du sulfate de calcium pour donner un ciment. Le sulfate de calcium utilisé inclut le gypse (sulfate de calcium dihydraté, CaSO₄.2H₂O), le semi-hydrate (CaSO₄.1/2H₂O), l'anhydrite (sulfate de calcium anhydre, CaSO₄) ou un de leurs mélanges. Le gypse et l'anhydrite existent à l'état naturel. Il est également possible d'utiliser un sulfate de calcium qui est un sous-produit de certains procédés industriels.

Le ciment est par exemple un ciment Portland de type CEM I selon la norme « Ciment » NF EN 197-1 datant d'avril 2012, de préférence appartenant à la classe de résistance 42,5N, 42,5R, 52,5N ou 52,5R selon cette même norme.

Le ciment peut également être un ciment de type, CEM II, CEM III, CEM IV ou CEM V selon cette même norme.

Le ciment peut également comprendre au moins une addition minérale.

Les additions minérales sont, par exemple, des laitiers (par exemple tels que définis dans la norme NF EN 197-1 d'avril 2012, paragraphe 5.2.2), des pouzzolanes naturelles ou artificielles (par exemple telles que définies dans la norme NF EN 197-1 d'avril 2012, paragraphe 5.2.3), des cendres volantes (par exemple telles que définies dans la norme NF EN 197-1 d'avril 2012, paragraphe 5.2.4), des schistes calcinés (par exemple tels que définis dans la norme NF EN 197-1 d'avril 2012, paragraphe 5.2.5), des additions minérales à base de carbonate de calcium, par exemple du calcaire (par exemple tel que défini dans la norme NF EN 197-1 d'avril 2012, paragraphe 5.2.6), des fumées de silice (par exemple telles que définies dans la norme NF EN 197-1 d'avril 2012, paragraphe 5.2.7), des métakaolins ou leurs mélanges.

Ainsi, l'invention concerne une composition hydraulique comprenant un liant hydraulique comportant un ciment, un superplastifiant spécifique dont la proportion est définie dans une gamme déterminée en poids sec par rapport au ciment, un accélérateur comprenant un sel de calcium dont la proportion est définie dans une gamme déterminée en poids sec par rapport au ciment, et présentant un rapport eau/ciment définie également dans une gamme déterminée.

La combinaison des différents composants de la composition hydraulique dans les différentes gammes revendiquées ainsi qu'un rapport Eau/Ciment déterminé permettent de conférer à la composition hydraulique obtenue une consistance non fluide dans les classes d'affaissement S1, S2 ou S3 convenant à sa mise en oeuvre sur chantier, maintenue pendant au moins les 90 premières minutes, et présentant une résistance en compression pouvant atteindre au moins 20 MPa 24 heures après le gâchage à 20°C, de préférence 18 heures après le gâchage à 20°C ou encore 14 heures après le gâchage à 20°C, une résistance d'au moins 20 MPa 24 heures après le gâchage à 10°C, et une résistance d'au moins 20 MPa 12 heures après le gâchage à 30°C.

Par conséquent, l'utilisation d'une telle composition hydraulique permet de réduire considérablement le temps d'indisponibilité de la chaussée par rapport aux solutions en béton actuelles.

De plus, ce temps d'indisponibilité de la chaussée se rapproche du temps d'indisponibilité engendré par la solution en enrobés bitumineux.

Une consistance dans la classe d'affaissement S1 permet l'application de la composition hydraulique sur la chaussée par une machine à coffrage glissant ou un finisseur.

Une consistance dans la classe d'affaissement S2 ou S3 permet l'application de la composition hydraulique sur la chaussée à l'aide d'une poutre vibrante.

Ces différents dispositifs de mise en oeuvre permettent d'obtenir un bon uni de surface mais également de conférer une pente à la chaussée en béton, ce qui n'est pas possible avec un béton fluide.

De telles consistances et une telle ouvrabilité sont notamment obtenues grâce à l'utilisation d'une adjuvantation spécifique, notamment un superplastifiant.

Ce superplastifiant est présent dans la composition hydraulique en des quantités qui peuvent varier de 0,18% à 0,35% en poids sec par rapport au ciment.

Par l'expression « superplastifiant », on entend un adjuvant haut réducteur d'eau qui à consistance constante permet de réduire de plus de 12% la quantité d'eau nécessaire à la réalisation d'un béton. Un superplastifiant présente une action fluidifiante dans la mesure où, pour une même quantité d'eau, l'ouvrabilité du béton est augmentée en présence du superplastifiant.

Le superplastifiant utilisé dans la composition hydraulique selon l'invention comprend un polymère ramifié comportant au moins une chaine pendante présentant une fonction terminale du type phosphonate ou phosphate.

Cette fonction terminale du type phosphonate ou phosphate de l'au moins une chaine pendante du superplastifiant permet à cette chaine pendante d'agripper des grains de ciment.

Plus précisément, le superplastifiant comprend au moins un composé organique (I) qui est un composé organique (I) hydrosoluble ou hydrodispersable, comportant au moins un groupement amino-di(alkylènephosphonique) et au moins une chaîne polyoxyalkylée, ou au moins un sel du composé (I), ledit composé (I) répondant à la formule : 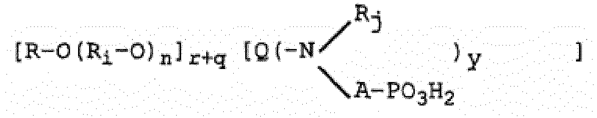 dans laquelle :
- R est un atome d'hydrogène ou un groupe hydrocarboné monovalent, saturé ou non, comportant de 1 à 18 (inclus) atomes de carbone et éventuellement un ou plusieurs hétéroatomes : de préférence, R est un atome d'hydrogène ou un groupe hydrocarboné monovalent, saturé ou non, comportant de 1 à 4 atomes de carbone ;
- 50 % à 100 % des Ri sont l'éthylène, 0 à 50 % des Ri sont le propylène et 0 à 5 % des éventuels autres Ri sont semblables ou différents entre eux et représentent un alkylène tel que le butylène, l'amylène, l'octylène ou le cyclohexène, ou un arylène comme le styrène ou le méthylstyrène ; ces Ri renferment éventuellement un ou plusieurs hétéroatomes ;
- Q est un groupe hydrocarboné comportant de 2 à 18 (inclus) atomes de carbone et éventuellement un ou plusieurs hétéroatomes ; de préférence Q est un groupe hydrocarboné comportant de 2 à 12 (inclus) atomes de carbone, plus préférentiellement de 2 à 6 (inclus) atomes de carbone, encore plus préférentiellement représente l'éthylène ou le propylène ;
- A est un groupe alkylidène comportant de 1 à 3 (inclus) atomes de carbone : de préférence A représente le groupe méthylène ;
- les Rj sont semblables ou différents entre eux et peuvent être choisis parmi :
   - le groupe A-PO3H2, A ayant la signification précitée,
   - et le groupe : 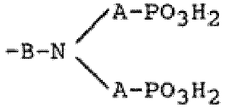 dans lequel B désigne un groupement alkylène comportant de 2 à 8 (inclus) atomes de carbone : de préférence, B représente l'éthylène ou le propylène et A a la signification précitée ;
   - "n" est un nombre entier compris de 20 à 250, bornes incluses ;
   - "r" est le nombre des groupes (R-O(Ri-O)n] portés par l'ensemble des Rj ;
   - "q" est le nombre des groupes [R-O(Ri-O)n] portés par Q ;
   - la somme "r+q" est au plus égale à 3 ;
   - "y" est un nombre entier égal à 1 ou 2.

De préférence, le superplastifiant utilisé selon la présente invention ne comprend pas de monomères vinyliques carboxyliques comme illustré par les exemples ci-après ne permettent pas d'obtenir une bonne consistance de la composition hydraulique.

Selon un aspect de l'invention, le nombre de chaines pendantes est inférieur ou égale à trois.

La composition hydraulique comprend également un accélérateur de prise comprenant un sel de calcium.

Selon un aspect de l'invention, le sel de calcium comprend un nitrite de calcium, un nitrate de calcium ou leurs mélanges.

Le sel de calcium est présent dans la composition hydraulique en des quantités qui peuvent varier de 0,26% à 2% en poids sec par rapport au ciment.

La composition hydraulique peut également comprendre d'autres adjuvants pour composition hydraulique, notamment un agent entraîneur d'air, un agent viscosant, un retardateur, un inertant des argiles, par exemple un de ceux décrits dans les normes NF EN 934-2 d'août 2012, NF EN 934-3 d'octobre 2012 ou NF EN 934-4 d'août 2009.

Les inertants des argiles sont des composés qui permettent de réduire ou de prévenir les effets néfastes des argiles sur les propriétés des liants hydrauliques. Les inertants des argiles incluent ceux décrits dans WO 2006/032785 et WO 2006/032786

Par ailleurs, l'homme du métier est en mesure de sélectionner les différentes valeurs de chaque composant dans chaque gamme revendiquée en fonction des caractéristiques recherchées de la composition hydraulique et des conditions climatiques.

Ainsi, plus la proportion de superplastifiant est grande dans la gamme revendiquée, et plus l'affaissement augmente et donc plus la composition hydraulique tend vers une classe d'affaissement S3.

De même, plus la proportion d'accélérateur est grande dans la gamme revendiquée, et plus l'hydratation de la composition hydraulique est précoce ce qui permet d'obtenir plus rapidement des résistances à la compression.

Bien entendu, l'acquisition rapide des résistances à la compression est réalisée au détriment de l'ouvrabilité.

De même, une augmentation du rapport Eau/Ciment aura tendance à retarder l'acquisition de ces résistances au profit de l'ouvrabilité.

Il est également connu qu'une augmentation de température accélère le processus d'hydratation d'une composition hydraulique et donc diminue son ouvrabilité.

Ainsi, une augmentation de température lors de l'élaboration de la composition hydraulique peut être compensée par l'augmentation de la proportion de superplastifiant et la diminution de la proportion d'accélérateur.

Inversement, une diminution de température lors de l'élaboration de la composition hydraulique peut être compensée par la diminution de la proportion de superplastifiant et l'augmentation de la proportion d'accélérateur.

Par ailleurs, les bétons pour chaussées doivent également répondre à des exigences particulières, notamment en fonction de leur exposition à l'environnement tel que cela est précisé dans la norme NF EN 206-1 datant de décembre 2012.

Notamment, une chaussée soumise à des cycles de gel/dégel doit comprendre un minimum de 4% d'air occlus.

Ainsi, selon un aspect de l'invention, la composition hydraulique comprend de 0,001% à 0,1% d'un agent entraineur d'air, pourcentage exprimé en poids sec par rapport au ciment, et de préférence de 0,001 % à 0,06%.

La présence d'agent entraineur d'air dans les proportions citées permet d'incorporer un minimum de 4 % d'air occlus dans la composition hydraulique selon la région dans laquelle doit être coulé le béton de manière à satisfaire à l'exigence de la norme NF EN 206-1 datant de décembre 2012.

A priori, le fait de devoir obtenir des résistances élevées à court terme est en contradiction avec l'exigence normative de devoir incorporer à minima 4 % d'air occlus pour pouvoir résister aux cycles de gel/dégel.

La présente invention permet de gérer le compromis entre la quantité d'air occlus imposée par la norme NF EN 206-1 datant de décembre 2012 et la résistance à la compression de la composition hydraulique.

La présence d'un agent entraineur d'air permet également de conférer à la composition hydraulique une bonne résistance à l'écaillage due au gel en présence de sels de déverglaçage.

Les agents entraîneurs d'air sont des adjuvants qui entraînent et stabilisent un nombre élevé de microbulles d'air, réparties uniformément dans la masse de la composition hydraulique et qui subsistent après durcissement de la composition hydraulique.

Contrairement aux bulles d'air occluses, les bulles d'air entraînées intentionnellement sont extrêmement petites (de 10 à 500 µm).

Ces bulles ne sont pas intimement liées et sont uniformément réparties dans la pâte, la pâte étant définie comme le mélange de liant hydraulique, d'eau et d'air.

Selon un aspect de l'invention, l'agent entraineur d'air comprend un acide gras sulphonique, un acide gras carboxylique ou leurs mélanges.

Un acide gras carboxylique entraine plus vite de l'air qu'un acide gras sulphonique.

Cependant, la quantité d'air entrainé par un acide gras carboxylique sature au-delà d'une certaine quantité d'air entrainé.

Un acide gras sulphonique est plus soluble qu'un acide gras carboxylique, ce qui lui permet au final de pouvoir entrainer une quantité d'air supérieure à celle pouvant être entrainée par l'acide gras carboxylique.

Une chaussée peut également être classée selon le trafic de véhicules subi.

Ce classement est défini dans la norme « chaussées en béton de ciment » NF P98-170 datant d'avril 2006 et se base sur une estimation du nombre de poids lourds circulant par jour et par sens de circulation sur la chaussée.

Selon la classe de trafic de la chaussée, on utilisera de préférence des gravillons concassés pour augmenter l'adhérence entre les pneus du véhicule et la chaussée plutôt que des gravillons roulés.

Dans les deux cas un traitement de surface pour augmenter l'adhérence entre les pneus du véhicule et la chaussée peut être envisagé, par exemple par rainurage, par balayage, grenaillage.

Des exemples, illustrant l'invention sans en limiter la portée de protection, vont être décrits ci-après.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons.

### EXEMPLES

Dans les différents exemples suivants, les pourcentages sont exprimés en pourcentages massiques.

L'appellation D/d telle que définie dans la norme NF EN 12620+A1 est précisée dans les différents tableaux pour les sables et les gravillons utilisés.

### Exemple 1 : sélection du superplastifiant et définition des composants de la composition hydraulique

Des essais de consistance sur une composition hydraulique ont été réalisés à 20°C avec cinq superplastifiants différents, parmi lesquels :
- superplastifiant 1 commercialisé sous le nom Optima 203, et comprenant des polymères de la famille chimique des polycarboxylates polyalkoxylés (PCP),
- superplastifiant 2 commercialisé sous le nom Advaflow 450, et comprenant des polymères de la famille chimique des PCP,
- superplastifiant 3 commercialisé sous la marque Omega 135, et comprenant majoritairement des polymères de la famille chimique des PCP,
- superplastifiant 4 commercialisé sous la marque Optima 100, et appartenant à la famille chimique des phosphonate. Ce superplastifiant est un polymère ramifié comportant au moins une chaine pendante ayant une fonction terminale du type phosphonate ou phosphate.

La composition hydraulique utilisée pour tester chacun de ces quatre superplastifiants comprenait des ciments provenant des cimenteries du Teil, une addition minérale avec un filler calcaire de surface spécifique de 0,8 m² par gramme et provenant de la carrière de Saint Béat, des granulats provenant des carrières de La patte et de Brefauchet ainsi qu'un des quatre superplastifiants à tester.

La quantité des composants utilisés pour chacune des quatre compositions hydrauliques testée est résumée dans le tableau 1 ci-dessous, sauf autrement spécifié les valeurs sont exprimées en kilogrammes par mètre cube de composition hydraulique:

**Tableau 1 : Formules des différentes compositions hydrauliques testées**

| | | **Composition hydraulique** | | | |
|---|---|---|---|---|---|
| | | **C1** | **C2** | **C3** | **C4** |
| **Ciment** | **Le Teil CEM I 52.5R** | 416,7 | 416,7 | 416,7 | 416,7 |
| **Filler** | **Saint béat** | 52,91 | 52,91 | 52,91 | 52,91 |
| **Sable** | **0/4 La Patte** | 766,9 | 766,9 | 766,9 | 766,9 |
| **Gravillons** | **4/6 La Patte** | 187,1 | 187,1 | 187,1 | 187,1 |
| | **6/10 La Patte** | 187,8 | 187,8 | 187,8 | 187,8 |
| | **11/22 Brefauchet** | 661,6 | 661,6 | 661,6 | 661,6 |
| **Superplastifiants** | **superplastifiant 1** | 4,68 | | | |
| | **superplastifiant 2** | | 5,03 | | |
| | **superplastifiant 3** | | | 4,38 | |
| | **superplastifiant 4** | | | | 3,24 |
| **Eau efficace** | | 175 | 175 | 175 | 175 |
| **Rapport E/C** | | 0,42 | 0,42 | 0,42 | 0,42 |
| **Volume de pâte (L/m3)** | | 328 | 328 | 328 | 328 |
| **Superplastifiant (% sec/L)** | | 0,22% | 0,30% | 0,22% | 0,21% |

Le pourcentage indiqué à la dernière ligne du tableau 1 indique la proportion en poids sec de superplastifiant utilisé dans la composition hydraulique.

Ces essais ont été réalisés selon le mode opératoire suivant :
- introduction du sable et des gravillons dans le malaxeur,
- mise en route du malaxeur,
- introduction en 30 secondes de l'eau de prémouillage équivalent à 5% de la masse de granulat, cette quantité d'eau étant retranchée sur la quantité d'eau de gâchage,
- malaxage pendant 30 secondes,
- repos pendant 4 minutes,
- malaxeur à l'arrêt, introduction du ciment et éventuellement du filler en 1 minute,
- malaxage pendant 1 minute,
- introduction en 30 secondes de l'eau de gâchage comprenant l'adjuvant en maintenant le malaxage,
- malaxage pendant 2 minutes, et
- arrêt du malaxeur.

Le malaxeur utilisé est de la marque Pemat modèle ZK50HE. Il comprend une pale mobile excentrée qui tourne à 60 tr/min dans une cuve qui tourne elle aussi dans le même sens à 40tr/min. La vitesse différentielle entre la pale mobile excentrée et la cuve crée le cisaillement. Le cisaillement est amplifié par une pale fixe fixée sur le bord de la cuve et ramène le produit sur la pale mobile excentrée.

Les mesures d'affaissement ont ensuite été réalisées selon la norme NF EN 12350-02 d'avril 2012. La presse utilisée est de la marque 3R et du modèle Quantris.

Les résultats de ces essais ont été rassemblés dans le tableau 2 suivant, les valeurs indiquées étant exprimées en cm :

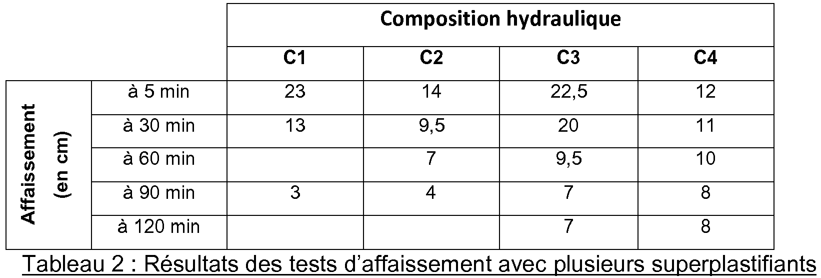

Ces résultats ont permis de constater que les compositions hydrauliques C1, C2 ou C3 présentent un mauvais maintien de rhéologie. Ce mauvais maintien de rhéologie ne permettait pas de garantir une consistance compatible avec une utilisation sur une chaussée.

Seule la composition hydraulique C4 qui utilise le superplastifiant 4 commercialisé par la société Chryso sous le nom commercial de Chryso® Fluid Optima 100 présentait une valeur d'affaissement à 90 min et même à 120 min se rapprochant le plus de la consistance de départ à 5 min, ce qui conférait à la composition hydraulique une consistance compatible avec les objectifs de consistance recherchés pour une utilisation sur une chaussée.

Ce superplastifiant est vendu sous forme liquide. La fiche technique fournie par le fabricant précise que la quantité d'extrait sec pour ce superplastifiant est égale à 31 % ± 1.5%. A partir de ce superplastifiant, plusieurs autres formules de composition hydraulique ont été réalisées.

### Exemple 2 : Formulations de gâchées témoins

Les essais de l'exemple 2 ont eu pour but d'une part de définir une plage de valeurs pour la proportion de superplastifiant dans la composition hydraulique, mais ont également eu pour but d'autre part de définir une plage de valeurs pour l'accélérateur du type sel de calcium et pour le rapport Eau/Ciment.

Les compositions hydrauliques réalisées utilisent différents ciments et fillers ainsi que différents granulats.

Les ciments utilisés proviennent de la cimenterie Lafarge du Teil pour le ciment de type CEM I 52.5R, de la cimenterie Lafarge du Havre pour le ciment de type CEM I 52.5N et de la cimenterie Lafarge de Kujawy en Pologne pour le ciment de type CEM I 42.5R.

Les caractéristiques techniques de chacun de ces ciments sont résumées dans le tableau 3 ci-après :

**Tableau 3 : Caractéristiques techniques des ciments utilisés**

| | | **Ciment 1** | **Ciment 2** | **Ciment 3** |
|---|---|---|---|---|
| | | **CEM I 52.5 N CE CP2 NF** | **CEM I 52.5 R CE CP2 NF** | **CEM I 42.5 R** |
| **Cimenterie** : | | **Le Havre** | **Le Teil** | **Kujawy Pologne** |
| **Composition minéralogique (% massique)** | **Alite mono** | 63,10 | 62,40 | 59,30 |
| | **Belite** | 15,10 | 17,20 | 14,80 |
| | **Ferrite** | 9,00 | 7,50 | 10,40 |
| | **Aluminate cubique** | 6,60 | 4,30 | 3,10 |
| | **Aluminate ortho** | 0,80 | 0,10 | 2,20 |
| | **Chaux CaO** | 0,40 | 0,50 | 0,30 |
| | **Portlandite Ca(OH)2** | 0,40 | 0,00 | 2,00 |
| | **Périclase** | 0,50 | 0,00 | 0,20 |
| | **Quartz** | 0,00 | 0,20 | 0,20 |
| | **Calcite** | 0,90 | 3,20 | 4,20 |
| **Ajouts (% massique)** | **Gypse** | 1,90 | 1,10 | 0,30 |
| | **Semi-hydrate** | 1,10 | 0,80 | 3,00 |
| | **Anhydrite** | 0,20 | 2,60 | 0,00 |
| **CaO libre (% massique)** | | 0,85 | 0,52 | 2,14 |
| **Alcalins solubles (% massique)** | **K2O Soluble** | 0,32 | 0,14 | 0,44 |
| | **Na2O Soluble** | 0,08 | 0,11 | 0,08 |
| **Composition chimique du clinker (% massique)** | **SiO2** | 20,14 | 20,42 | 19,17 |
| | **Al2O3** | 5,19 | 4,40 | 4,82 |
| **Composition chimique du clinker (% massique)** | **Fe2O3** | 2,78 | 2,42 | 3,17 |
| | **CaO** | 65,06 | 65,50 | 63,39 |
| | **MgO** | 1,21 | 0,92 | 1,24 |
| | **K2O** | 0,36 | 0,15 | 0,57 |
| | **Na2O** | 0,16 | 0,17 | 0,23 |
| | **SO3** | 3,01 | 3,55 | 3,11 |
| | **TiO2** | 0,23 | 0,20 | 0,30 |
| | **Mn2O3** | 0,09 | 0,05 | 0,08 |
| | **P2O5** | 0,20 | 0,07 | 0,12 |
| | **Cr2O3** | Valeur < à la limite de détection | Valeur < à la limite de détection | 0,01 |
| | **ZrO2** | 0,02 | 0,02 | 0,01 |
| | **SrO** | 0,04 | 0,16 | 0,02 |
| | **PAF** | 1,27 | 1,93 | 3,33 |
| | **Total** | 99,76 | 99,97 | 99,57 |
| **Surface Spécifique BLAINE** - **Physique (cm2/g)** | | 3 570 | 4 000 | 3 480 |
| **Courbe granulo laser modèle ciment (% massique)** | **D10 µm** | 2,26 | 2,22 | 3,20 |
| | **D50 µm** | 17,34 | 12,18 | 15,79 |
| | **D90 µm** | 57,37 | 33,75 | 44,17 |
| | **D(4,3) µm** | 24,49 | 15,41 | 20,18 |

Les fillers calcaires, lorsqu'ils sont utilisés, proviennent de la carrière Lafarge de Saint Béat ou bien sont commercialisés par la société Saint-Hilaire sous la marque Filafluid®.

Les granulats utilisés dans les compositions hydrauliques proviennent quant à eux des carrières Lafarge de La Patte, de la Petite Craz ou d'Yssingeaux.

Les granulats utilisés dans les compositions selon l'invention incluent du ou des sables et des gravillons définis selon la norme NF EN 12620-A1 de juin 2008.

Chaque granulat est caractérisé par deux chiffres : le premier correspond au « d » tel que défini dans la norme NF P 18-545 de septembre 2011 et le second correspond au « D » tel que défini dans la norme NF P 18-545 de septembre 2011.

L'accélérateur utilisé est commercialisé par la société Sika® sous le nom commercial Set 02.

L'entraineur d'air utilisé est soit commercialisé par la société BASF® sous le nom commercial MasterAir 104 ou par la société Chryso® sous le nom commercial Chryso®Air G100.

Plusieurs formulations de gâchées témoins (T1 à T5) ont été élaborées à partir de tout ou partie de ces différents composants selon un protocole semblable à celui utilisé précédemment pour la sélection du superplastifiant.

La proportion d'air contenue initialement dans la composition hydraulique n'étant pas connue à l'avance, la quantité des composants de la composition hydraulique a été initialement déterminée pour une proportion d'air théorique égale à 2%.

Une mesure de la proportion d'air à l'aéromètre est réalisée à T=60 min, puis les quantités des composants de la composition hydraulique ont ensuite été réajustées par calcul en fonction de la valeur réelle de proportion d'air qui a été mesurée.

Ces formulations de gâchées témoins sont présentées dans le tableau 4 ci-après :

**Tableau 4 : Formulations de gâchées témoins**

| | | **Gâchées témoins** | | | | |
|---|---|---|---|---|---|---|
| | | **T1** | **T2** | **T3** | **T4** | **T5** |
| **Température** : | | 20°C | 10°C | 10°C | 20°C | 20°C |
| **Ciment** | Le Teil CEM I 52.5R | 448,7 | 352,4 | 389,1 | 382,6 | 400,4 |
| **Filler** | Saint béat | 21,6 | 6,9 | 7,7 | | |
| **Sable1** | 0/4 La Patte | 743,2 | | | | |
| **Sable2** | 0/4R Petite Craz | | 825,8 | 791,2 | 887,8 | 804,7 |
| **Gravillon1** | 4/6 La Patte | 181,3 | | | | |
| **Gravillon2** | 6/10 La Patte | 182,0 | | | | |
| **Gravillon3** | 10/20 La patte | 707,2 | | | | |
| **Gravillon4** | Yssingeaux 4/6 | | | | | |
| **Gravillon5** | Yssingeaux 6/10 | | 214,2 | 205,2 | 230,3 | 208,8 |
| **Gravillon6** | Yssingeaux 10/14 | | 823,7 | 789,1 | 885,5 | 802,6 |
| **Fluidifiant** | Optima 100 | 1,20 | 4,03 | 4,17 | 4,16 | 3,65 |
| **Accélérateur** | Set 02 | 10,58 | 35,67 | 28,13 | 5,43 | 28,39 |
| **Entraineur d'Air** | MasterAir 104 | 1,93 | 0,09 | 0,10 | 0,09 | 0,10 |
| **Eeff** | | 188,4 | 144,5 | 147,9 | 136,1 | 152,2 |
| **E/C** | | 0,420 | 0,410 | 0,380 | **0,356** | 0,380 |
| **Superplastifiant** | | **0,07%** | 0,31% | 0,29% | 0,31% | 0,25% |
| **Accélérateur de prise** | | 0,84% | **3,37%** | **2,43%** | 0,50% | **2,43%** |

L'eau efficace E_{eff} est l'eau requise pour l'hydratation d'un liant hydraulique et la fluidité d'une composition hydraulique à l'état frais.

L'eau efficace et son mode de calcul sont discutés dans la norme EN 206-1/CN de décembre 2012, page 17, paragraphe 3.1.30.

A partir de ce tableau 4, on a pu remarquer que :
- la composition hydraulique selon la formulation de gâchée témoin T1 utilisait une proportion de superplastifiant en poids sec par rapport au ciment qui était égale à 0,07%, alors que la proportion d'accélérateur de prise en poids sec par rapport au ciment était égale à 0,84% et que le rapport E/C était égal à 0,42,
- la composition hydraulique selon la formulation témoin T2 utilisait une proportion d'accélérateur de prise en poids sec par rapport au ciment était égale à 3,37%, alors que la proportion de superplastifiant en poids sec par rapport au ciment était égale à 0,31% et que le rapport E/C était égal à 0,41,
- la composition hydraulique selon la formulation témoin T3 utilisait une proportion d'accélérateur de prise en poids sec par rapport au ciment qui était égale à 2,43%, alors que la proportion de superplastifiant en poids sec par rapport au ciment était égale à 0,29% et que le rapport E/C était égal à 0,38,
- la composition hydraulique selon la formulation témoin T4 utilisait un rapport E/C de 0,356, alors que la proportion de superplastifiant en poids sec par rapport au ciment était égale à 0,31% et que la proportion d'accélérateur de prise en poids sec par rapport au ciment était égale à 0,50%, et que
- la composition hydraulique selon la formulation témoin T5 utilisait une proportion d'accélérateur de prise en poids sec par rapport au ciment qui était égale à 2,43%, alors que la proportion de superplastifiant en poids sec par rapport au ciment était égale à 0,25% et que le rapport E/C était égal à 0,38.

Le tableau 5 ci-après montre les résultats des tests d'affaissement obtenus pour les formulations de gâchées témoins T1 à T5 du tableau 4 :

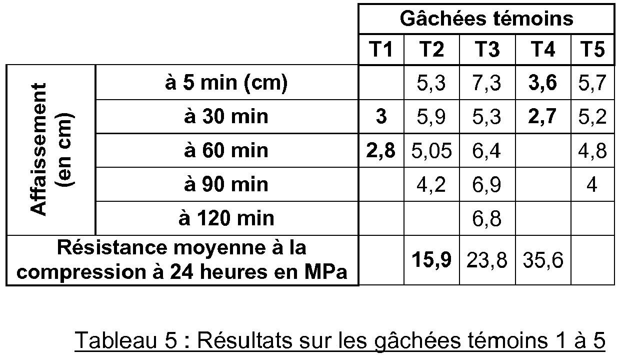

Les valeurs de résistance à la compression ont été obtenues en suivant la méthode d'essai décrite dans la norme NF EN 12390-3 d'avril 2012.

Le tableau 5 a montré que pour la composition hydraulique selon la formulation de gâchée témoin T1 pour laquelle la proportion de superplastifiant par rapport au ciment était inférieure à la borne inférieure de la gamme revendiquée et pour laquelle la proportion d'accélérateur et le rapport E/C étaient dans les gammes revendiquées n'était pas assez fluide et s'éloignait d'une consistance du type S1 ou S2 recherchée.

De même, la composition hydraulique selon la formulation de gâchée témoin T2 pour laquelle la proportion d'accélérateur de prise en poids sec par rapport au ciment était supérieure à la borne supérieure de la gamme revendiquée alors que la proportion de superplastifiant et que le rapport E/C étaient dans les gammes revendiquées présentait une ouvrabilité trop courte et une résistance en compression trop faible, ce qui s'éloignait des performances recherchées.

De même, la composition hydraulique selon la formulation de gâchée témoin T3 pour laquelle la proportion d'accélérateur de prise en poids sec par rapport au ciment était supérieure à la borne supérieure de la gamme revendiquée alors que la proportion de superplastifiant et que le rapport E/C étaient dans les gammes revendiquées présentait une surfluidification et s'éloignait d'une consistance du type S1 ou S2 recherchée.

De même, la composition hydraulique selon la formulation de gâchée témoin T4 pour laquelle le rapport E/C était inférieure à la borne inférieure de la gamme revendiquée alors que la proportion de superplastifiant en poids sec par rapport au ciment et la proportion d'accélérateur de prise en poids sec par rapport au ciment étaient dans les gammes revendiquées présentait un mauvais maintien de rhéologie, ce qui rendait cette composition hydraulique difficile à manipuler.

De même, la composition hydraulique selon la formulation de gâchée témoin T5 pour laquelle la proportion d'accélérateur de prise en poids sec par rapport au ciment était supérieure à la borne supérieure de la gamme revendiquée alors que la proportion de superplastifiant et que le rapport E/C étaient dans les gammes revendiquées présentait un mauvais maintien de rhéologie au bout de 90 minutes.

### Exemple 3 : Formulations de gâchées selon l'invention

Plusieurs formulations de gâchées de compositions hydrauliques selon l'invention (F1 à F18) ont été élaborées à une température de 20°C à partir de tout ou partie des différents composants présentés précédemment et selon un mode opératoire semblable à celui qui avait été utilisé précédemment pour la sélection du superplastifiant.

Ces formulations de gâchées selon l'invention sont présentées dans les tableaux 6A et 6B ci-après :

**Tableau 6A : Formulations de composition hydraulique selon l'invention**

| | | **Formulations de gâchées** | | | | | | | | |
|---|---|---|---|---|---|---|---|---|---|---|
| | | **F1** | **F2** | **F3** | **F4** | **F5** | **F6** | **F7** | **F8** | **F9** |
| **Ciment 1** | Le Teil CEM I 52.5R | 442,7 | 441,8 | 414,1 | 406,7 | 342,3 | 346,0 | 342,9 | 352,9 | 350,3 |
| **Filler 1** | Saint béat | 21,,3 | 21,3 | | 34,5 | 18,0 | 18,2 | 6,8 | 7,0 | 6,9 |
| **Filler 2** | Filafluid | | | 35,1 | | | | | | |
| **Sable1** | 0/4 La Patte | 876,3 | 928,0 | | | | | | | |
| **Sable2** | Yssingeaux 0/4 | | | 230,0 | | | | | | |
| **Sable3** | 0/4R Petite Craz | | | 542,8 | 740,3 | 802,2 | 810,9 | 803,6 | 827,1 | 821,0 |
| **Gravillon1** | 4/6 La Patte | 154,6 | 145,2 | | | | | | | |
| **Gravillon2** | 6/10 La Patte | 155,2 | 145,7 | | | | | | | |
| **Gravillon3** | 10/20 La patte | 603,1 | 566,4 | | | | | | | |
| **Gravillon4** | Yssingeaux 4/6 | | | 98,1 | | | | | | |
| **Gravillon5** | Yssingeaux 6/10 | | | 97,8 | 192,1 | 208,1 | 210,4 | 208,5 | 214,6 | 213,0 |
| **Gravillon6** | Yssingeaux 10/14 | | | 751,9 | 738,4 | 800,2 | 808,8 | 801,5 | 825,0 | 818,9 |
| **Fluidifiant1** | Optima 100 | 2,85 | 3,00 | 3,15 | 2,94 | 3,03 | 3,07 | 3,68 | 3,79 | 3,38 |
| **Accélérateur** | Set 02 | 18,42 | 18,38 | 19,11 | 16,27 | 13,29 | 7,23 | 4,96 | 5,10 | 20,26 |
| **Entraineur d'Air 1** | MasterAir 104 | 1,90 | 4,43 | 0,98 | 0,96 | 0,70 | 0,44 | 0,42 | 0,09 | 0,09 |
| **Eeff** | | 185,9 | 185,5 | 173,9 | 170,8 | 143,8 | 145,3 | 140,6 | 144,7 | 143,6 |
| **E/C** | | 0,420 | 0,420 | 0,420 | 0,420 | 0,420 | 0,420 | 0,410 | 0,410 | 0,410 |
| **% Superplastifiant** | | 0,18% | 0,19% | 0,20% | 0,19% | 0,24% | 0,24% | 0,30% | 0,30% | 0,26% |
| **% Accélérateur de prise** | | 1,48% | 1,48% | 1,47% | 1,28% | 1,28% | 0,69% | 0,50% | 0,50% | 1,96% |

**Tableau 6B : Formulations de composition hydraulique selon l'invention**

| | | **Formulations de gâchées** | | | | | | | | |
|---|---|---|---|---|---|---|---|---|---|---|
| | | **F10** | **F11** | **F12** | **F13** | **F14** | **F15** | **F16** | **F17** | **F18** |
| **Ciment 1** | Le Teil CEM I 52.5R | 341,4 | 352,0 | 356,1 | 391,2 | 357,2 | | | 399,6 | |
| **Ciment 2** | Le Havre CEM I 52.5N | | | | | | 353,0 | 364,2 | | |
| **Ciment 3** | Kujawy CEM I 42.5 R | | | | | | | | | 412,2 |
| **Filler 1** | Saint béat | 6,7 | | | | | | | | |
| **Sable3** | 0/4R Petite Craz | 800,1 | 816,7 | 826,2 | 786,1 | 840,4 | 822,9 | 814,2 | 803,0 | 827,3 |
| **Gravillon3** | 10/20 La patte | | | | | | | | 814,0 | 838,7 |
| **Gravillon5** | Yssingeaux 6/10 | 207,6 | 211,9 | 214,3 | 203,9 | 218,0 | 213,5 | 211,2 | | |
| **Gravillon6** | Yssingeaux 10/14 | 798,1 | 814,6 | 824,1 | 784,1 | 838,2 | 820,8 | 812,1 | | |
| **Gravillon7** | 4/10 La patte | | | | | | | | 212,9 | 219,3 |
| **Fluidifiant1** | Optima 100 | 3,66 | 3,83 | 4,37 | 4,11 | 3,88 | 2,97 | 3,58 | 3,92 | 3,76 |
| **Accélérateur** | Set 02 | 4,94 | 4,99 | 2,52 | 19,41 | 3,55 | 15,02 | 20,66 | 17,00 | 17,54 |
| **Entraineur d'Air 1** | MasterAir 104 | | 0,09 | 0,13 | 0,09 | | | | 0,19 | 0,20 |
| **Entraineur d'Air 2** | Chryso®Air G100 | 2,19 | | | | 0,10 | 0,10 | 0,10 | | |
| **Eeff** | | 140,0 | 144,3 | 146,0 | 148,6 | 136,8 | 144,7 | 138,4 | 151,8 | 156,6 |
| **E/C** | | 0,410 | 0,410 | 0,410 | 0,380 | 0,383 | 0,410 | 0,380 | 0,380 | 0,380 |
| **Superplastifiant** | | 0,30% | 0,31% | 0,35% | 0,29% | 0,31% | 0,24% | 0,27% | 0,28% | 0,26% |
| **Accélérateur de prise** | | 0,50% | 0,50% | 0,25% | 1,71% | 0,35% | 1,47% | 1,96% | 1,47% | 1,50% |

Dans toutes ces formulations, la proportion de superplastifiant et la proportion d'accélérateur de prise en poids sec par rapport au ciment ainsi que le rapport E/C sont tous compris dans les gammes revendiquées.

Toutes ces formulations comprennent un minimum de 4% d'air occlus et sont donc conformes à l'exigence de la norme NF EN 206-1 datant de décembre 2012.

Les tableaux 7A et 7B ci-après montrent les résultats des tests d'affaissement et de résistance mécanique obtenus pour les formulations de gâchée selon l'invention F1 à F18 des tableaux 6A et 6B.

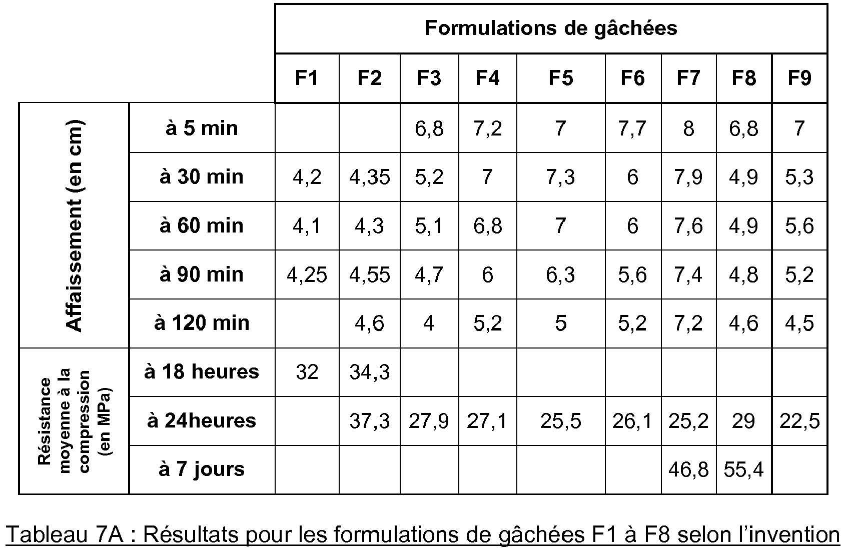

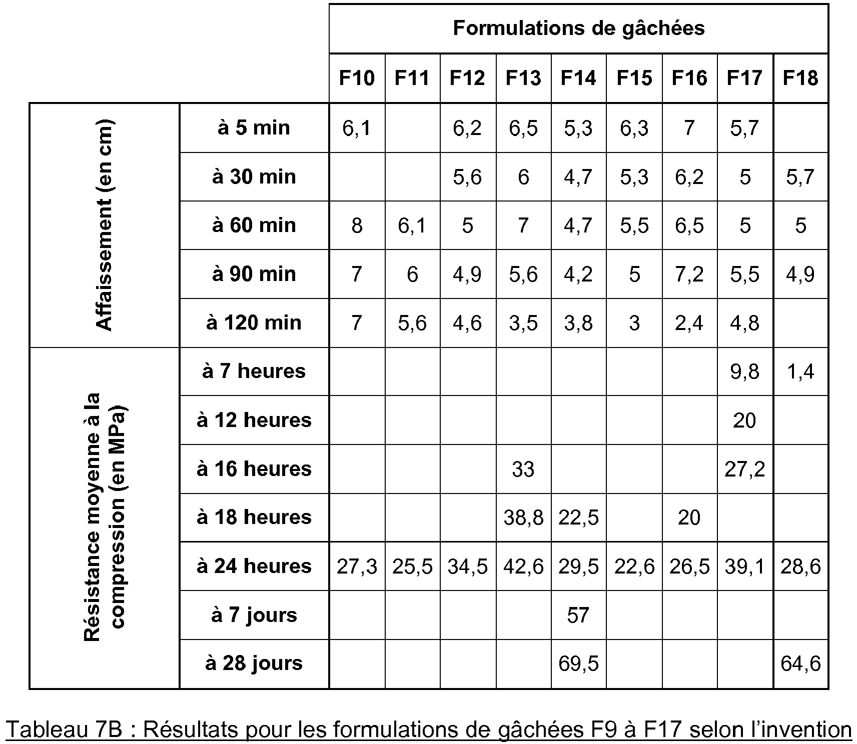

Les tableaux 7A et 7B montrent que toutes les formulations F1 à F18 présentent une résistance en compression de plus de 20 MPa à 24 heures à 20°C. Les formulations F1, F2 et F13 présentent une résistance en compression de plus de 30 MPa à 18 heures à 20°C et même à 16 heures pour la formulation F13.

La formulation F17 présente une résistance en compression de 20 MPa à 12 heures à 20°C.

De plus, ces formulations confèrent à la composition hydraulique une consistance de type S1, S2 ou S3 et une ouvrabilité entre 10°C et 30°C permettant sa mise en oeuvre sur le chantier.

## Revendications

1. Composition hydraulique pour la réalisation des chaussées, en particulier pour la réfection des chaussées comprenant :
- un liant hydraulique comprenant un ciment,
- de 0,18% à 0,35% d'un superplastifiant, pourcentage exprimé en poids sec par rapport au ciment, ledit superplastifiant comprenant un polymère ramifié comportant au moins une chaine pendante ayant une fonction terminale du type phosphonate ou phosphate, et
- de 0,25% à 2% d'un accélérateur de prise, pourcentage exprimé en poids sec par rapport au ciment, ledit accélérateur de prise comprenant un sel de calcium, ladite composition hydraulique présentant un rapport Eau/Ciment supérieur à 0,38 et strictement inférieur à 0,45.

2. Composition hydraulique selon la revendication 1, dans laquelle le nombre de chaines pendantes est inférieur ou égale à trois.

3. Composition hydraulique selon l'une des revendications 1 ou 2 dans laquelle le sel de calcium comprend un nitrite de calcium, un nitrate de calcium ou leurs mélanges.

4. Composition hydraulique selon l'une des revendications 1 à 3, dans laquelle le ciment comprend un ciment Portland de type CEM I selon la norme « Ciment » NF EN 197-1 d'avril 2012.

5. Composition hydraulique selon la revendication 4, dans laquelle le ciment Portland de type CEM I appartient à la classe de résistance 42,5N, 42,5R, 52,5N ou 52,5R selon la norme « Ciment » NF EN 197-1 d'avril 2012.

6. Composition hydraulique selon l'une des revendications 1 à 5, dans laquelle le ciment comprend au moins une addition minérale.

7. Composition hydraulique selon l'une des revendications 1 à 6, comprenant de 0,001% à 0,1% d'un agent entraineur d'air, pourcentage exprimé en poids sec par rapport au ciment, et de préférence de 0,001% à 0,06%.

8. Composition hydraulique selon la revendication 7, dans laquelle l'agent entraineur d'air comprend un acide gras sulphonique, un acide gras carboxylique ou leurs mélanges.

9. Utilisation d'une composition hydraulique selon l'une des revendications 1 à 8, la composition étant du type prête à l'emploi et présentant une consistance non fluide dans les classes d'affaissement S1, S2 ou S3 selon la norme « Béton » NF EN 206-1 de décembre 2012, pour la réalisation de chaussées, en particulier pour la réfection de chaussées.

## Patentansprüche

1. Hydraulische Zusammensetzung für den Bau der Straßen, insbesondere für die Instandsetzung der Straßen, umfassend:
- ein hydraulisches Bindemittel, das einen Zement umfasst,
- 0,18 % bis 0,35 % eines Hochleistungsverflüssigers, Prozentsatz ausgedrückt in Trockengewicht bezogen auf den Zement, wobei der Hochleistungsverflüssiger ein verzweigtes Polymer umfasst, welches mindestens eine Seitenkette umfasst, die eine Endgruppe vom Typ Phosphonat oder Phosphat aufweist, und
- 0,25 % bis 2 % eines Abbindebeschleunigers, Prozentsatz ausgedrückt in Trockengewicht bezogen auf den Zement, wobei der Abbindebeschleuniger ein Calciumsalz umfasst, wobei die hydraulische Zusammensetzung ein Verhältnis Wasser/Zement von größer als 0,38 und strikt kleiner als 0,45 aufweist.

2. Hydraulische Zusammensetzung nach Anspruch 1, wobei die Anzahl von Seitenketten kleiner als oder gleich drei ist.

3. Hydraulische Zusammensetzung nach einem der Ansprüche 1 oder 2, wobei das Calciumsalz ein Calciumnitrit, ein Calciumnitrat oder deren Mischungen umfasst.

4. Hydraulische Zusammensetzung nach einem der Ansprüche 1 bis 3, wobei der Zement einen Portlandzement vom Typ CEM I gemäß der Norm "Ciment" NF EN 197-1 aus April 2012 umfasst.

5. Hydraulische Zusammensetzung nach Anspruch 4, wobei der Portlandzement vom Typ CEM I der Festigkeitsklasse 42,5N, 42,5R, 52,5N oder 52,5R gemäß der Norm "Ciment" NF EN 197-1 aus April 2012 angehört.

6. Hydraulische Zusammensetzung nach einem der Ansprüche 1 bis 5, wobei der Zement mindestens einen mineralischen Zuschlag umfasst.

7. Hydraulische Zusammensetzung nach einem der Ansprüche 1 bis 6, die 0,001 % bis 0,1 %, und vorzugsweise 0,001 % bis 0,06 %, Prozentsatz ausgedrückt in Trockengewicht bezogen auf den Zement, eines Luftporenbildners umfasst.

8. Hydraulische Zusammensetzung nach Anspruch 7, wobei der Luftporenbildner eine Sulfonfettsäure, eine Carboxylfettsäure oder deren Mischungen umfasst.

9. Verwendung einer hydraulischen Zusammensetzung nach einem der Ansprüche 1 bis 8, wobei die Zusammensetzung vom gebrauchsfertigen Typ ist und eine nicht fluide Konsistenz in den Setzmaßklassen S1, S2 oder S3 gemäß der Norm "Beton" NF EN 206-1 aus Dezember 2012 aufweist, für den Bau von Straßen, insbesondere für die Instandsetzung von Straßen.

## Claims

1. Hydraulic composition for the construction of pavements, and in particular for the repair of pavements, comprising:
- a hydraulic binder comprising a cement,
- 0.18% to 0.35% of a superplasticiser, where the percentage is expressed by dry weight compared with the cement, and where said superplasticiser comprises a branched polymer comprising at least one pendant chain, with a terminal function of the phosphonate or phosphate type, and
- 0.25% to 2% of a setting accelerator, where the percentage is expressed by dry weight compared with the cement, where said setting accelerator comprises a calcium salt,
where said hydraulic composition has a Water/Cement ratio higher than 0.38 and strictly less than 0.45.

2. Hydraulic composition according to claim 1, in which the number of pendant chains is less than or equal to three.

3. Hydraulic composition according to either of claims 1 or 2 in which the calcium salt comprises a calcium nitrite, a calcium nitrate or their blends.

4. Hydraulic composition according to any of claims 1 to 3, in which the cement comprises a Portland cement of the CEM I type according to the "Cement" standard NF EN 197-1 of April 2012.

5. Hydraulic composition according to claim 4, in which the Portland cement of CEM I type is in resistance category 42.5 N, 42.5 R, 52.5 N or 52.5 R according to "Cement" standard NF EN 197-1.

6. Hydraulic composition according to one of claims 1 to 5, in which the cement comprises at least one mineral addition.

7. Hydraulic composition according to one of claims 1 to 6, comprising 0.001% to 0.1% of an air-entraining agent, which percentage is expressed by dry weight relative to the cement, and preferably 0.001% to 0.06%.

8. Hydraulic composition according to claim 7, in which the air-entraining agent comprises a sulphonic fatty acid, a carboxylic fatty acid, or their blends.

9. Use of a hydraulic composition according to one of claims 1 to 8, where the composition is of the ready-mixed type, and has a non-fluid consistency with an S1, S2 or S3 slump category according to the "Concrete" standard NF EN 206-1 of December 2012, for the construction of pavements, and in particular for the repair of pavements.
